Europäisches Patentamt

European Patent Office

Office européen des brevets

(19)

(11) Publication number: **0 026 106**
A1

(12) **EUROPEAN PATENT APPLICATION**

(21) Application number: **80303348.9**

(22) Date of filing: **24.09.80**

(51) Int. Cl.³: **B 32 B 15/08**
**B 32 B 31/12**

(30) Priority: **24.09.79 GB 7933006**

(43) Date of publication of application:
**01.04.81 Bulletin 81/13**

(84) Designated Contracting States:
**DE FR NL**

(71) Applicant: **Windle, Alan Hardwick**
**15 Storeys Way**
**Cambridge(GB)**

(71) Applicant: **Challis, Anthony Arthur Leonard**
**106 Woodsford Square Kensington**
**London W14(GB)**

(72) Inventor: **Windle, Alan Hardwick**
**15 Storeys Way**
**Cambridge(GB)**

(72) Inventor: **Challis, Anthony Arthur Leonard**
**106 Woodsford Square Kensington**
**London W14(GB)**

(74) Representative: **Neville, Peter Warwick**
**Patent Department National Research Development**
**Corporation P.O. Box 236 Kingsgate House**
**66-74 Victoria Street London SW1E 6SL(GB)**

(54) Method of bonding two surfaces together and article obtained by this method.

(57) Two surfaces (e.g. of poly(ethylene terephthalate) film) are bonded together, to make a gas-impermeable film, by vapour-depositing aluminium on them in a vacuum of $10^{-6}$ bar, giving aluminium coatings 0.1 micron thick. The coated surfaces are pressed together while enough aluminium vapour is present to getter any oxygen. The coatings thus remain unoxidised and bond well together under the pressure.

Croydon Printing Company Ltd.

## BONDING TWO SURFACES TOGETHER

This invention relates to a method of bonding two surfaces together, and to an article comprising two surfaces so bonded. Examples of such articles are a polymer-film/metal/polymer-film sandwich, and a rigid (perhaps mild steel) object clad with stainless steel foil.

Polymer-film thinly coated with metal is a major commercial product, much used in packaging, both because of its attractive appearance and because of its reasonable impermeability to gases and vapours.

A commonly used combination is poly(ethylene teraphthalate) film and aluminium, and this is manufactured conventionally, quite simply. Clean polymer-film is briefly exposed under moderately high vacuum to the surface of hot metal - usually molten. Metal atoms leaving the metal surface cross the space to the polymer-film and adhere to the film. In typical commercial equipment the film is loaded into the vacuum chamber as a roll, which is unwound to pass about 10 cm above a pool of molten aluminium in an electrically heated trough and then is rewound.

Typically the polymer-film is in the range 10-100 microns thick. The aluminium thickness is in the range 0.01 to 0.1 microns and depends on both temperature and film speed over the trough.

Commercial film in practice always carries dust particles, which are covered with aluminium on passing over the trough. On gentle abrasion of the coated film (say, by applying a soft brush), the dust particles can be removed, and each leaves a hole of its own size in the metal coating. These 'dust holes' are principally responsible for the measured gas-permeability of commercial coated film.

The invention provides a method of bonding two surfaces together of which at least one is flexible, comprising coating them in an evacuated chamber with an oxidisable metal in the gas phase, and pressing the coatings together in the presence of the metal in the gas phase, said presence effecting a gettering substantially preventing superficial oxidation of the coatings. 'Metal' includes silicon and germanium which are quite capable of gettering oxygen, and 'gas phase' includes metal as ions, as might be formed in ion-plating, and vapour.

A convenient metal is aluminium, and the metal coatings together may be from 0.01 to 0.5 microns thick. Alternatively, the coatings may be so thin as to be discontinuous but covering at least 25% (typically 30-40%) of the respective surface. The flexible surface may be of stainless steel foil. Both surfaces may be flexible, and one or both may be of a polymer-film, preferably from 10 to 100 microns thick, for example poly(ethylene terephthalate), polyethylene, ("polythene" (trade mark)) or viscose ("cellophane" (trade mark)).

Preferably in the method, each surface is coated by passing the respective surface past a source of metal vapour, and conveniently the source and the surfaces are so disposed that the one source coats both surfaces with the metal vapour and provides a discernible metal vapour pressure (preferably at least $10^{-8}$ bar) over the coatings until they are pressed together.

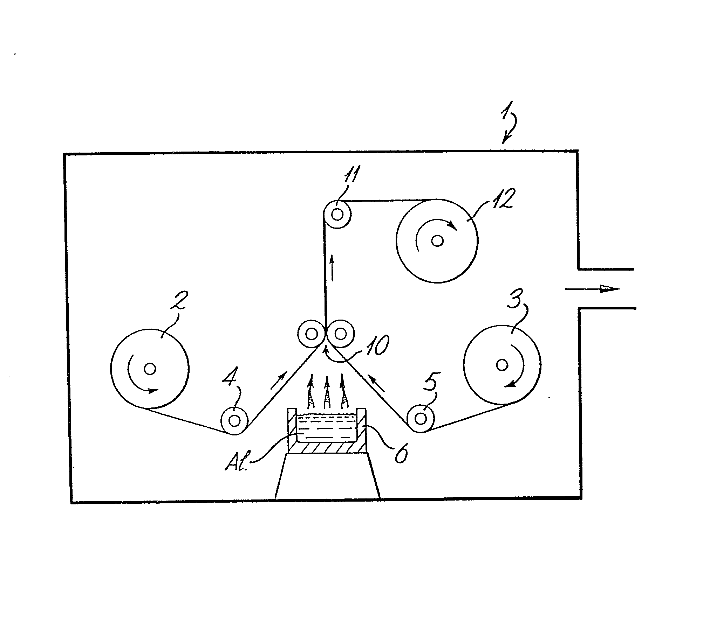

The invention will now be described by way of example, with reference to the accompanying drawing, which illustrates schematically a plant for making a laminate according to the invention.

The plant is enclosed in a vessel 1 evacuated to $10^{-6}$ bar. Feed rolls 2 and 3 of 36-micron-thick poly(ethylene terephthalate) film unroll over respective guide rolls 4 and 5.

An electrically heated trough 6 containing molten aluminium is symmetrically disposed with respect to the two films downstream of the guide rolls 4 and 5, and aluminium atoms vaporise into the gas phase from the trough and produce an adherent coating on the films, while at the same time providing a vapour pressure over the films. The unwinding speed, trough position and aluminium temperature are adjusted to give an aluminium coating thickness of about 0.04 microns on each film.

The coated films then immediately pass, still in the region of very high vacuum generated by the gettering action of the aluminium in the gas phase and therefore without becoming oxidised, to a roll nip 10, which, pressing the films together with the coatings facing each other, unites the coatings. As metal vapour is present right up into the roll nip 10, this region is highly gettered, i.e. oxygen is removed with high efficiency, thus helping to ensure minimal oxidation of the film coatings. The rollers constituting the nip 10 are resiliently pressed together and are themselves faced with resilient material, to achieve an even pressure for uniting the coatings. The pressure is sufficient to unite the coatings but not so great (especially in the case of films over 40 microns thick) as substantially to deform the films, since they might then wrinkle upon relaxation. The resulting laminate (the desired product) is led over a guide roller 11 to a wind-up roll 12, which, when full, is removed for use or sale.

It is very difficult at reasonable cost to exclude dust particles of the order of 1 micron in diameter from the plant 1, and therefore it is likely that the films carry dust particles on them. However, the dust particles cannot be removed by abrasion since they are protected from dislodgment by the overlying film. Therefore the dust holes, which allow gas to permeate through commercial coated film, do not arise. The laminate as a whole is robust, and can be heat- or adhesive- sealed and printed on both sides.

Improvements in the strength of the bond between the vacuum deposited material can be achieved if the substrate is subjected to ionizing radiation or bombarded by ionized vapour either before or during the deposition process. Subsequent aging treatments are also able to improve strength as is the presence of a deformable precoating on the substrate.

An oxidised region of aluminium arises adjacent each film, as happens also in commercial coated film, because oxygen diffuses through the poly(ethylene terephthalate), and contributes to the impermeability of the structure as a whole as well as improving the polymer-metal bond strength.

Where a very thin non-continuous layer of aluminium is deposited, strong polymer-polymer bonding appears to be possible between film areas which are both not coated with the aluminium.

- 4 -

This may be due to the aluminium's acting as a means of depositing considerable surface heat to the polymer films, whose surfaces thus heat-bond together.

- 5 -

CLAIMS

1. A method of bonding two surfaces together, of which at least one is flexible, comprising coating them in an evacuated chamber with an oxidisable metal in the gas phase, and pressing the coatings together in the presence of the metal in the gas phase, said presence effecting a gettering substantially preventing superficial oxidation of the coatings.

2. A method according to Claim 1, wherein the metal is aluminium.

3. A method according to Claim 1 or 2, wherein the coatings are so thin as to be discontinuous but cover at least 25% of the respective surface.

4. A method according to Claim 1 or 2, wherein the coatings together are from 0.01 to 0.5 microns thick.

5. A method according to any preceding claim, wherein the flexible surface is of a stainless steel foil.

6. A method according to any preceding Claim, wherein both surfaces are flexible.

7. A method according to any preceding Claim, wherein one or both surfaces are of a polymer film.

8. A method according to Claim 7, wherein the polymer film is any one of, or the films are any one or two of: poly(ethylene terephthalate), polyethylene or viscose.

9. A method according to Claim 7 or 8, wherein the thickness of the polymer film(s) is from 10 to 100 microns.

10. A method according to any preceding claim, wherein each surface is coated by passing the respective surface past a source of metal vapour.

11. A method according to Claim 10, wherein the source and the surfaces are so disposed that the one source coats both surfaces with the metal vapour and provides a discernaible metal vapour pressure over the coatings until they are pressed together.

12. A method of bonding two surfaces together, substantially as hereinbefore described with reference to the accompanying drawing.

13. An article comprising two surfaces bonded together by a method according to any preceding claim.

# EUROPEAN SEARCH REPORT

European Patent
Office

| Category | DOCUMENTS CONSIDERED TO BE RELEVANT | | CLASSIFICATION OF THE APPLICATION (Int. Cl. 3) |
|---|---|---|---|
| | Citation of document with indication, where appropriate, of relevant passages | Relevant to claim | |
| X | DE - A - 1 940 028 (SIEMENS)<br>  * Claims 1-4; page 1, paragraph 3 - page 2, paragraph 4 * | 1,5-7, 10,12, 13 | B 32 B 15/08<br>       31/12 |
| A | GB - A - 1 215 673 (CEE BEE MANU-FACT.) | | |
| A | FR - A - 2 340 817 (WIHURI OY) | | |

TECHNICAL FIELDS
SEARCHED (Int.Cl. 3)

B 32 B
C 23 C 14/20

CATEGORY OF
CITED DOCUMENTS

X: particularly relevant
A: technological background
O: non-written disclosure
P: intermediate document
T: theory or principle underlying
   the invention
E: conflicting application
D: document cited in the
   application
L: citation for other reasons

&: member of the same patent
  family,
  corresponding document

The present search report has been drawn up for all claims

| Place of search | Date of completion of the search | Examiner |
|---|---|---|
| The Hague | 16-12-1980 | BLASBAND |

EPO Form 1503.1  06.78